# EUROPEAN PATENT APPLICATION

(11) **EP 4 807 342 A1**
(43) Date of publication of application: **16.09.2026**
(21) Application number: 24897767.0
(22) Date of filing: 20.06.2024
(51) Int. Cl.: G01N 15/0205, G01N 15/1434, G01N 21/64, G01N 21/53

(54) **APPARATUS FOR DETECTING SCATTERED LIGHT AND FLUORESCENT LIGHT**

(30) Priority: 01.12.2023 KR 20230172339
(71) Applicant: LG Electronics Inc., Yeongdeungpo-gu Seoul 07336 (KR)
(72) Inventor: PARK, Jongmyoung, Seoul 06772 (KR); JIN, Wonhyeog, Seoul 06772 (KR); CHO, Yongho, Seoul 06772 (KR); SEO, Hyekyoung, Seoul 06772 (KR); KIM, Oedong, Seoul 06772 (KR)
(74) Representative: Schott, Jakob Valentin
(86) International application number: PCT/KR2024/008515
(87) International publication number: WO 2025/116166

(57) **Abstract**

The present specification relates to an apparatus for detecting scattered light and fluorescent light. The apparatus for detecting scattered light and fluorescent light may comprise: a light source unit for emitting light; a flow path unit which transfers particles, and which has a region where the particles meet the emitted light; a fluorescent light detection unit for detecting fluorescent light generated by emitting the light at the particles; a scattered light detection unit which is positioned on the same plane as the fluorescent light detection unit and which detects scattered light generated by emitting the light at the particles; a condensing mirror which is positioned in the direction opposite to the fluorescent light detection unit with respect to the flow path unit, and which condenses the fluorescent light detected by the fluorescent light detection unit; and an optical filter blocking the scattered light that is incident to the fluorescent light detection unit.

## Description

### TECHNICAL FIELD

The present embodiments relate to a scattered light and fluorescence detection apparatus, and more particularly, to scattered light and fluorescence detection apparatus that may detect both scattered light and fluorescence.

### BACKGROUND

In general, technology for measuring bioaerosols suspended in the air (biological particles such as viruses, bacteria, and fungal spores) is important in various fields, including public health, environmental monitoring, and life science research.

In particular, technology has advanced to detect both fluorescence and scattered light generated by irradiating bioaerosols with laser beams to accurately determine not only the size but also the specific characteristics and concentration of bioaerosols.

However, to measure bioaerosols, fluorescence and scattered light need to be separately received, but separation of fluorescence and scattering detectors leads to issues such as increased system volume and poor assembly, which presents a disadvantage in that commercialization is difficult.

### DISCLOSURE

### Technical Problem

An object of embodiments of the present disclosure is to provide a scattered light and fluorescence detection apparatus in which a fluorescence detector and a scattered light detector are positioned at the same plane.

An object of embodiments of the present disclosure is to provide a scattered light and fluorescence detection apparatus that specifies a position in which a fluorescence detector is formed.

The objects to be achieved by the inventive concept are not limited to the technical objects described above and other objects that are not stated herein will be clearly understood by those skilled in the art from the following specifications. **Technical Solution**

According to embodiments, a scattered light and fluorescence detection apparatus includes a light source configured to irradiate light, a flow path unit that moves particles and in which an area where the particles and the irradiated light come into contact with each other is formed, a fluorescence detector configured to detect fluorescence generated by irradiating the light onto the particles, a scattered light detector located on the same plane as the fluorescence detector and configured to detect scattered light generated by irradiating the light onto the particles, a light collection mirror positioned in an opposite direction to the fluorescence detector and configured to detect fluorescence detected by the fluorescence detector, and an optical filter configured to block scattered light entering the fluorescence detector.

According to embodiments, the particles may include first particles located at a top of the flow path unit and second particles located at a bottom of the flow path unit, and the fluorescence detector may be located between a first position in which the fluorescence generated by irradiating the light onto the first particles is concentrated by the light collection mirror and a second position in which the fluorescence generated by irradiating the light onto the second particle is concentrated by the concentrating mirror.

According to embodiments, a focus of the light may be formed inside the flow path unit.

According to embodiments, the light collection mirror may be formed in a spherical or aspherical shape.

According to embodiments, based on a radius of the light collection mirror being r, a center of the flow path unit may be formed between a position corresponding to r/2 from the light collection mirror and a position corresponding to r from the light collection mirror.

According to embodiments, the optical filter may be configured to transmit a wavelength longer than a wavelength of the light and block a wavelength equal to the wavelength of the light.

According to embodiments, the optical filter may be formed between the fluorescence detector and the flow path unit.

According to embodiments, the scattered light and fluorescence detection apparatus may further include a stray light remover on which light that does not come into contact with the particles among the light irradiated by the light source is incident.

According to embodiments, the scattered light detector may be positioned at a certain distance from the fluorescence detector.

### Advantageous Effects

Embodiments provide a scattered light and fluorescence detection apparatus in which a fluorescence detector and a scattered light detector are positioned on the same plane to obtain an effect of providing a high optical detection rate by using a low-cost optical system while having a simple structure.

Embodiments provide a scattered light and fluorescence detection apparatus that specifies a position in which a fluorescence detector is formed to obtain an effect of efficiently increasing the amount of fluorescence detected by the fluorescence detector.

The effects that are achievable by the present disclosure are not limited to what has been particularly described hereinabove and other advantages not described herein will be more clearly understood by persons skilled in the art from the following description.

### BRIEF DESCRIPTION OF THE DRAWINGS

FIG. 1 is a diagram showing a scattered light and fluorescence detection apparatus according to embodiments.
FIG. 2 is a cross-sectional view showing an A-A section of FIG. 1.
FIG. 3 is a cross-sectional view showing a B-B section of FIG. 1.
FIG. 4 is a plan view showing a scattered light and fluorescence detection apparatus according to embodiments.
FIG. 5 is a side view showing a scattered light and fluorescence detection apparatus according to embodiments.
FIG. 6 is a diagram illustrating a position in which a light focus of a scattered light and fluorescence detection apparatus is formed according to embodiments.
FIG. 7 is a diagram for explaining a position of a fluorescence detector of a scattered light and fluorescence detection apparatus according to embodiments.

### DETAILED DESCRIPTION

Reference will now be made in detail to embodiments of the present disclosure, examples of which are illustrated in the accompanying drawings. Wherever possible, the same reference numbers will be used throughout the drawings to refer to the same or like parts, and redundant description thereof will be omitted.

As used herein, the suffixes "module" and "unit" are added or used interchangeably to facilitate preparation of this specification and are not intended to suggest distinct meanings or functions. In describing embodiments disclosed in this specification, relevant well-known technologies may not be described in detail in order not to obscure the subject matter of the embodiments disclosed in this specification.

The features of the present disclosure will be more clearly understood from the accompanying drawings and should not be limited by the accompanying drawings, and it is to be appreciated that all changes, equivalents, and substitutes that do not depart from the spirit and technical scope of the present disclosure are encompassed in the present disclosure.

It will be understood that, although the terms first, second, third etc. may be used herein to describe various elements, these elements should not be limited by these terms. These terms are only used to distinguish one element from another element.

It will be understood that when an element is referred to as being "on", "connected to" or "coupled to" another element, it may be directly on, connected or coupled to the other element or intervening elements may be present. In contrast, when an element is referred to as being "directly on," "directly connected to" or "directly coupled to" another element or layer, there are no intervening elements present.

The singular expressions in the present specification include the plural expressions unless clearly specified otherwise in context.

It will be further understood that the terms "comprises" and/or "comprising" when used in this specification, specify the presence of stated features, integers, steps, operations, elements, and/or components, but do not preclude the presence or addition of one or more other features, integers, steps, operations, elements, components, and/or groups thereof.

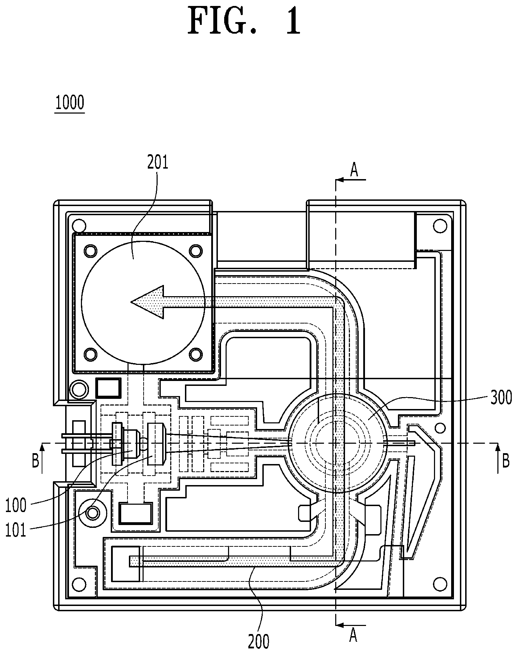

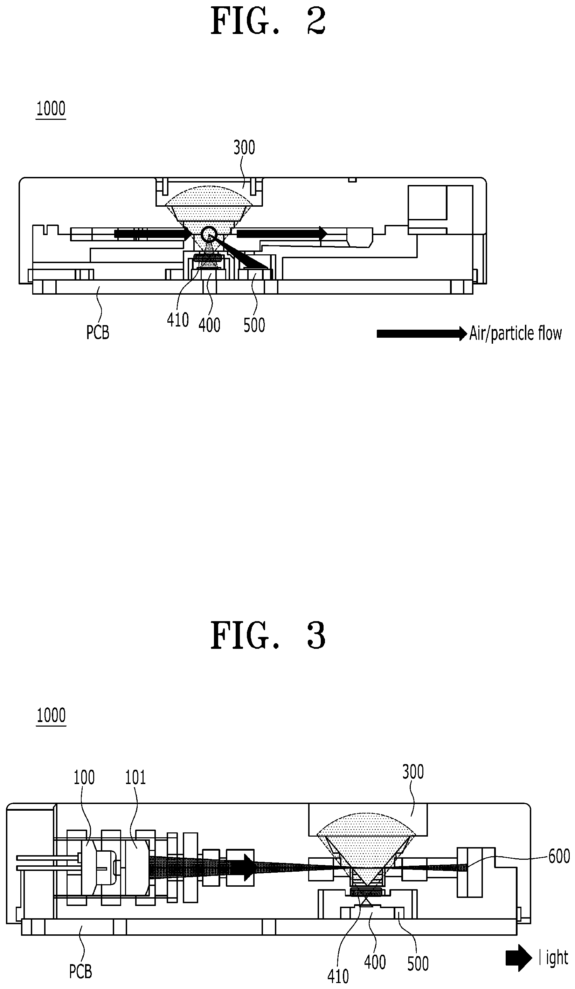

FIG. 1 is a diagram showing a scattered light and fluorescence detection apparatus according to embodiments. FIG. 2 is a cross-sectional view showing an A-A section of FIG. 1. FIG. 3 is a cross-sectional view showing a B-B section of FIG. 1.

A scattered light and fluorescence detection apparatus 1000 shown in FIGS. 2 and 3 corresponds to the scattered light and fluorescence detection apparatus 1000 shown in FIG. 1.

Referring to FIGS. 1 to 3, the scattered light and fluorescence detection apparatus 1000 according to embodiments may include a light source 100, a flow path unit 200, a light collection mirror 300, a fluorescence detector 400, a scattered light detector 500, and a stray light remover 600.

The light source 100 may be a component configured to irradiate light, and the light irradiated by the light source 100 may be in a visible wavelength range. In this case, the light irradiated by the light source 100 may correspond to light that comes into contact with particles moved inside the flow path unit 200 to generate fluorescence and scattered light, as will be described below. For example, the light source 100 may correspond to a laser diode.

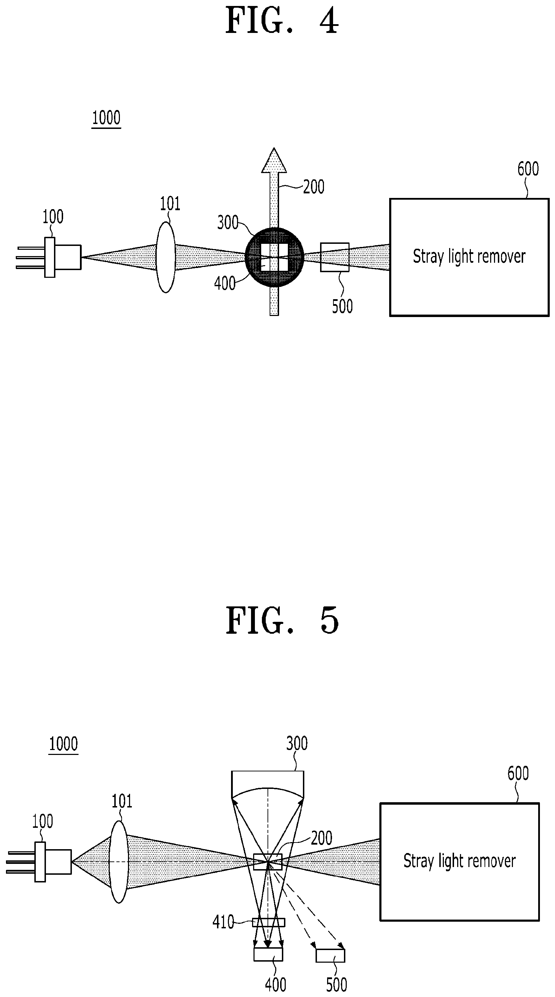

The scattered light and fluorescence detection apparatus 1000 according to embodiments may further include a lens 101 configured to adjust the focus of the light irradiated from the light source 100. That is, the scattered light and fluorescence detection apparatus 1000 may further include the lens 101 that controls the refraction of light to control the position of the focus of the irradiated light. A detailed description thereof will be provided with reference to FIGS. 4 to 6.

The flow path unit 200 may be a component configured to move particles, and an area may be formed in which light irradiated by the light source 100 and particles may come into contact with each other. That is, as illustrated in FIG. 1, the light irradiated by the light source 100 may come into contact with particles moved inside the flow path unit 200. In this case, the particles moved from the flow path unit 200 may correspond to bioaerosols suspended in the air.

In more detail, the light irradiated by the light source 100 may come into contact with particles moved inside the flow path unit 200 in an area in which the light collection mirror 300 is located. The flow path unit 200 may include a fan 201 to move particles in one direction inside.

The light collection mirror 300 may be positioned facing the fluorescence detector 400. In more detail, the light collection mirror 300 may be located in an opposite direction to the fluorescence detector 400 with respect to the flow path unit 200. The light collection mirror 300 may be formed in a spherical shape or an aspherical shape such that fluorescence to be detected is collected and the collected fluorescence may be fed to the fluorescence detector 400. A detailed description of the light collection mirror 300 will be provided with reference to FIGS. 4 and 5.

The fluorescence detector 400 may detect fluorescence generated by irradiating light onto the particles, and the scattered light detector 500 may detect scattered light generated by irradiating light onto the particles. Fluorescence is a phenomenon in which a specific substance emits light of lower energy (long wavelength) after absorbing light, and scattered light is a phenomenon in which light interacts with particles or molecules and scatters at various angles.

Accordingly, the scattered light and fluorescence detection apparatus 1000 according to embodiments has an effect of simultaneously detecting fluorescence and scattered light generated when light irradiated from the light source 100 comes into contact with particles moving inside the flow path unit 200 by using the fluorescence detector 400 and the scattered light detector 500.

The fluorescence detector 400 may be formed in a position facing the light collection mirror 300. That is, as shown in FIG. 2, the fluorescence detector 400 may be positioned below the light collection mirror 300 such that all the fluorescence collected from the light collection mirror 300 may be introduced.

The scattered light detector 500 may be located on the same plane as the fluorescence detector 400. That is, the scattered light detector 500 and the fluorescence detector 400 may both be formed on the same printed circuit board (PCB).

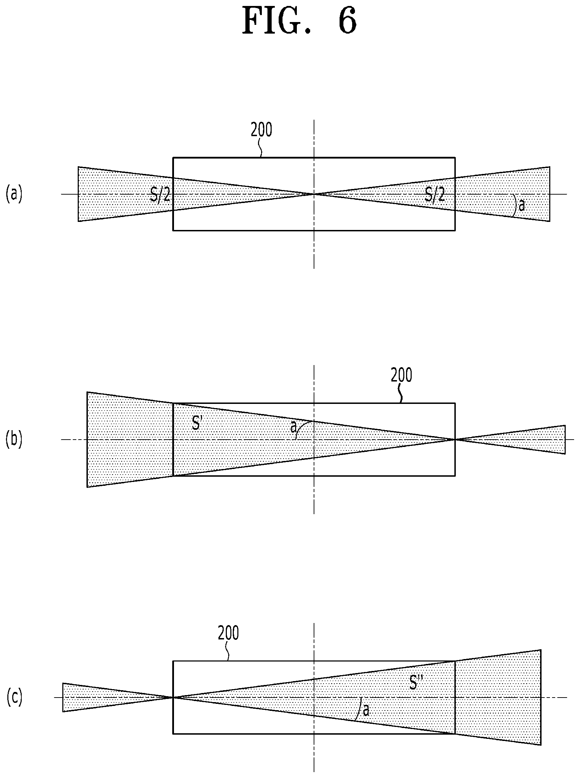

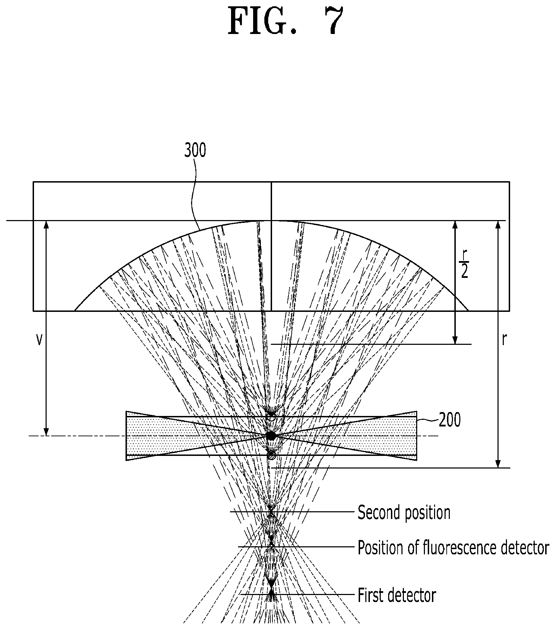

Accordingly, the scattered light and fluorescence detection apparatus 1000 according to the embodiments, unlike the existing scattered light and fluorescence detection apparatus, has an effect of having a simpler structure and, in particular, of designing a configuration at a low cost while providing a high optical detection rate by positioning the fluorescence detector 400 and the scattered light detector 500 on the same plane. In particular, a high optical detection rate may be provided by efficiently setting the position of the focus of light irradiated by the light source 100 and a positional relationship between the light collection mirror 300 and the flow path unit 200 or the fluorescence detector 400. A detailed description thereof will be provided with reference to FIGS. 6 and 7.

The stray light remover 600 is configured to remove light that does not come into contact with particles located inside the flow path unit 200 among the light irradiated from the light source 100. That is, light irradiated from the light source 100, which does not come into contact with particles and thus does not generate fluorescence or scattered light, may be incident on the stray light remover 600 and may be removed inside the stray light remover 600.

FIG. 4 is a plan view showing a scattered light and fluorescence detection apparatus according to embodiments. FIG. 5 is a side view showing a scattered light and fluorescence detection apparatus according to embodiments.

The scattered light and fluorescence detection apparatus 1000 shown in FIGS. 4 and 5 corresponds to the scattered light and fluorescence detection apparatus 1000 shown in FIGS. 1 to 3.

Hereinafter, the scattered light and fluorescence detection apparatus 1000 according to embodiments will be described in more detail with reference to FIGS. 4 and 5.

As shown in FIGS. 4 and 5, light irradiated from the light source 100 may come into contact with particles located inside the flow path unit 200 by the lens 101. In more detail, the focus of the light irradiated from the light source 100 may be positioned inside the flow path unit 200 by the lens 101. A detailed description thereof will be provided with reference to FIG. 6.

When light is irradiated onto particles, both fluorescence and scattered light may occur depending on a wavelength range of the light and the characteristics of the particles. In this case, the generated fluorescence may move directly to the fluorescence detector 400 or be reflected by the light collection mirror 300 and move to the fluorescence detector 400. That is, the fluorescence detected by the fluorescence detector 400 may include fluorescence that moves directly to the fluorescence detector 400 among the fluorescence generated by irradiating light onto the particles, and fluorescence that moves to the light collection mirror 300 and moves to the fluorescence detector 400 after being reflected from the light collection mirror 300 among the fluorescence generated by irradiating light onto the particles.

Accordingly, the scattered light and fluorescence detection apparatus 1000 according to embodiments has an effect of increasing the amount of fluorescence detected by the fluorescence detector 400 by the light collection mirror 300.

Unlike fluorescence, the scattered light generated may be moved directly to the scattered light detector 500. That is, the scattered light detected by the scattered light detector 500 may include only the scattered light that moves directly to the scattered light detector 500 among the scattered light generated by light being irradiated onto the particles.

In this case, the scattered light and fluorescence detection apparatus 1000 according to embodiments may further include an optical filter 410 to prevent scattered light, which moves to the light collection mirror 300 and is reflected from the light collection mirror 300, among the scattered light generated by irradiating light onto particles, from being entering the fluorescence detector 400. That is, the optical filter 410 may pass fluorescence entering the fluorescence detector 400 and block scattered light entering the fluorescence detector 400. For example, the optical filter 410 may include a filter using a dielectric coating or a filter that absorbs a selective wavelength.

In more detail, the optical filter 410 may transmit a wavelength corresponding to a fluorescence wavelength and block a wavelength corresponding to a scattered light wavelength. In this case, the fluorescence wavelength may correspond to 500 nm to 600 nm, and the scattered light wavelength may correspond to 405 nm to 450 nm.

FIG. 6 is a diagram illustrating a position in which a light focus of a scattered light and fluorescence detection apparatus is formed according to embodiments. In more detail, FIG. 6 is a diagram for explaining a difference in an area in which particles and light are capable of colliding depending on movement of the position of a light focus.

The flow path unit 200 shown in FIG. 6 corresponds to the flow path unit 200 shown in FIG. 1 to FIG. 5.

First, referring to (a) of FIG. 6, (a) of FIG. 6 is a diagram showing a case in which a light focus is formed at the center of the flow path unit 200. Assuming that the width of the flow path unit 200 is W, the height of the flow path unit 200 is H, and the vertical angle of the light irradiated by the light source 100 is a, an area S in which particles located inside the flow path unit 200 come into contact with light may satisfy Expression 1 below.$S = 2 \times \left(0.5\times W\times 2\times 0.5\times W\times tan\left(α\right)\right) = 0.5 \times {W}^{2} \times tan \left(α\right)$

Referring to (b) of FIG. 6, (b) of FIG. 6 is a diagram showing a case in which a light focus is formed on a right side of the flow path unit 200. In more detail, (b) of FIG. FIG. 6 shows a case in which the light focus is located inside the flow path unit 200 and at the same time is located furthest from the light source 100. Likewise, assuming that the width of the flow path unit 200 is W, the height of the flow path unit 200 is H, and the vertical angle of the light irradiated by the light source 100 is a, an area S' in which particles located inside the flow path unit 200 come into contact with light may satisfy Expression 2 below.$S ′ = \left.0.5\times W\times 2\times W\times tan\left(α\right)\right) = {W}^{2} \times tan \left(α\right)$

Lastly, referring to (c) of FIG. 6, (c) of FIG. 6 is a diagram showing a case in which a light focus is formed on a left side of the flow path unit 200. In more detail, (c) of FIG. FIG. 6 shows a case in which the light focus is located inside the flow path unit 200 and at the same time is located closest to the light source 100. Likewise, assuming that the width of the flow path unit 200 is W, the height of the flow path unit 200 is H, and the vertical angle of the light irradiated by the light source 100 is a, an area S" in which particles located inside the flow path unit 200 come into contact with light may satisfy Expression 3 below.$S " = \left.0.5\times W\times 2\times W\times tan\left(α\right)\right) = {W}^{2} \times tan \left(α\right)$

According to Expressions 1 to 3, the position in which the focus of the light irradiated from the light source 100 is formed is formed closer to or further away from the light source 100 relative to the center, rather than at the center of the flow path 200. This corresponds to a case in which an area where the light comes into contact with the particles located inside the flow path unit 200 is large. That is, assuming a flow rate of particles moving inside the flow path unit 200 is the same, the area where the particles and light come into contact with each other inside the flow path unit 200 may be twice as large when the position in which the light irradiated from the light source 100 is focused corresponds to the front or rear portion relative to the center of the flow path unit 200 compared to when a position in which the light irradiated from the light source 100 is focused corresponds to the center of the flow path unit 200.

Accordingly, the light irradiated by the light source 100 has a focus formed inside the flow path unit 200, and among these, the focus may be formed close to or far from the light source 100 with respect to the center of the flow path unit 200.

FIG. 7 is a diagram for explaining a position of a fluorescence detector of a scattered light and fluorescence detection apparatus according to embodiments.

The flow path unit 200 shown in FIG. 7 corresponds to the flow path unit 200 shown in FIG. 1 to FIG. 6. The light collection mirror 300 shown in FIG. 7 corresponds to the light collection mirror 300 shown in FIGS. 1 to 5.

Referring to FIG. 7, when v is a distance from the light collection mirror 300 to the center of the flow path unit 200 and r is a radius of the light collection mirror 300, the center of the flow path unit 200 may be located between r/2, which is the focus of the light collection mirror 300, and r, which is a radius of the light collection mirror 300. In this case, the light collection mirror 300 may be formed in a spherical shape or an aspherical shape.

Accordingly, the scattered light and fluorescence detection apparatus 1000 according to embodiments has an effect that all generated scattered light and fluorescence may reach the scattered light detector 500 and the fluorescence detector 400, respectively, even if a point where scattered light and fluorescence are generated is changed up and down, because the center of the flow path unit 200 is positioned between r/2, which is the focus of the light collection mirror 300, and r, which is a radius of the light collection mirror 300.

As shown in FIG. 7, a position in which the fluorescence detector 400 is formed may be located between a first position and a second position. In this case, the first position may correspond to a position in which fluorescence generated by irradiating light onto first particles (white dots) located at the top of the flow path unit 200 is reflected by the light collection mirror 300, and the reflected fluorescence is concentrated again. The second position may correspond to a position in which fluorescence generated by irradiating light onto second particles (hatched dots) located at the bottom of the flow path unit 200 is reflected by the light collection mirror 300, and the reflected fluorescence is concentrated again.

That is, the position of the fluorescence generated varies depending on the position of the particles present inside the flow path unit 200, and similarly, the position in which the generated fluorescence is reflected and concentrated by the light collection mirror 300 may also vary.

Therefore, the scattered light and fluorescence detection apparatus 1000 according to embodiments has an effect of more efficiently increasing the amount of fluorescence flowing into the fluorescence detector 400 by disposing the fluorescence detector 400 between the position in which fluorescence generated by the particles located at the top of the flow path unit 200 is concentrated and the position in which fluorescence generated by the particles located at the bottom is concentrated.

The detailed description of the embodiments of the present disclosure is given to enable those skilled in the art to realize and implement the present disclosure. While the present disclosure has been described referring to the embodiments of the present disclosure, those skilled in the art will appreciate that many modifications and changes can be made to the present disclosure without departing from the spirit and essential characteristics of the present disclosure. For example, the structures of the above-described embodiments of the present disclosure can be used in combination. The above embodiments are therefore to be construed in all aspects as illustrative and not restrictive.

Therefore, the present disclosure intends not to limit the embodiments disclosed herein but to give a broadest range matching the principles and new features disclosed herein.

## Claims

1. A scattered light and fluorescence detection apparatus 1000 comprising:
a light source 100 configured to irradiate light;
a flow path unit 200 that moves particles and in which an area where the particles and the irradiated light come into contact with each other is formed;
a fluorescence detector 400 configured to detect fluorescence generated by irradiating the light onto the particles;
a scattered light detector 500 located on the same plane as the fluorescence detector 400 and configured to detect scattered light generated by irradiating the light onto the particles;
a light collection mirror 300 positioned in an opposite direction to the fluorescence detector 400 and configured to detect fluorescence detected by the fluorescence detector 400; and
an optical filter 410 configured to block scattered light entering the fluorescence detector 400.

2. The scattered light and fluorescence detection apparatus 1000 of claim 1, wherein the particles include first particles located at a top of the flow path unit 200 and second particles located at a bottom of the flow path unit 200, and
the fluorescence detector 400 is located between a first position in which the fluorescence generated by irradiating the light onto the first particles is concentrated by the light collection mirror 300 and a second position in which the fluorescence generated by irradiating the light onto the second particle is concentrated by the concentrating mirror.

3. The scattered light and fluorescence detection apparatus 1000 of claim 1, wherein a focus of the light is formed inside the flow path unit 200.

4. The scattered light and fluorescence detection apparatus 1000 of claim 1, wherein the light collection mirror 300 is formed in a spherical or aspherical shape.

5. The scattered light and fluorescence detection apparatus 1000 of claim 4, wherein, based on a radius of the light collection mirror 300 being r, a center of the flow path unit 200 is formed between a position corresponding to r/2 from the light collection mirror 300 and a position corresponding to r from the light collection mirror 300.

6. The scattered light and fluorescence detection apparatus 1000 of claim 1, wherein the optical filter 410 is configured to transmit a wavelength longer than a wavelength of the light and block a wavelength equal to the wavelength of the light.

7. The scattered light and fluorescence detection apparatus 1000 of claim 1, wherein the optical filter 410 is formed between the fluorescence detector 400 and the flow path unit 200.

8. The scattered light and fluorescence detection apparatus 1000 of claim 1, further comprising a stray light remover 600 on which light that does not come into contact with the particles among the light irradiated by the light source 100 is incident.

9. The scattered light and fluorescence detection apparatus 1000 of claim 1, wherein the scattered light detector 500 is positioned at a certain distance from the fluorescence detector 400.
